# EUROPÄISCHE PATENTSCHRIFT

(11) **EP 1 151 044 B1**
(45) Veröffentlichungstag und Bekanntmachung des Hinweises auf die Patenterteilung: **09.02.2005**
(21) Anmeldenummer: 99963364.7
(22) Anmeldetag: 02.12.1999
(51) Int. Cl.: C09C 1/48

(54) **DOTIERTE RUSSE**
DOPED SOOTS
SUIES DOPEES

(30) Priorität: 23.12.1998 DE 19859873
(43) Veröffentlichungstag der Anmeldung: 07.11.2001
(73) Patentinhaber: Degussa AG, 40474 Düsseldorf (DE)
(72) Erfinder: BERGEMANN, Klaus, D-50170 Kerpen-Sindorf (DE); VOGEL, Karl, D-63755 Alzenau (DE)
(86) Internationale Anmeldenummer: PCT/EP1999/009405
(87) Internationale Veröffentlichungsnummer: WO 2000/039223

(56) Entgegenhaltungen:
- US-A- 3 094 428

## Beschreibung

Die Erfindung betrifft einen Ruß, dessen Herstellung sowie dessen Verwendung.

Ruße kommen in großem Umfang als Schwarzpigment und als Verstärker und Füllstoff zur Anwendung. Sie werden mit unterschiedlichen Eigenschaften nach verschiedenen Verfahren produziert. Am häufigsten ist die Herstellung durch oxidative Pyrolyse von kohlenstoffhaltigen Rußrohstoffen. Hierbei werden die Rußrohstoffe bei hohen Temperaturen in Anwesenheit von Sauerstoff unvollständig verbrannt. Zu dieser Klasse von Ruß-Herstellverfahren gehören zum Beispiel das Furnaceruß-Verfahren, das Gasruß-Verfahren und das Flammruß-Verfahren. Als kohlenstoffhaltige Rußrohstoffe werden überwiegend mehrkernige aromatische Rußöle eingesetzt. Der Produktstrom der oxidativen Pyrolyse besteht aus einem Wasserstoff und Kohlenmonoxid enthaltenden Abgas und darin suspendiertem feinteiligen Ruß, der in einer Filteranlage vom Abgas abgetrennt wird.

Beim Furnaceruß-Verfahren erfolgt die unvollständige Verbrennung in einem mit hochfeuerfestem Material ausgekleideten Reaktor. Hierzu wird in einer Vorbrennkammer durch Verbrennen eines Brennstoff/Luft-Gemisches ein Strom heißer Abgase erzeugt, in die der Rußrohstoff eingesprüht oder eingespritzt wird. Der sich bildende Ruß wird durch Einsprühen von Wasser in den Reaktor abgeschreckt und vom Gasstrom abgetrennt. Das Furnaceruß-Verfahren erlaubt die Herstellung von Rußen mit einer sehr großen Bandbreite der rußtechnischen Eigenschaften.

Die Flammruß-Apparatur besteht aus einer gußeisernen Schale, die den flüssigen oder gegebenenfalls geschmolzenen Rohstoff aufnimmt, und einer feuerfest ausgemauerten Abzugshaube. Der Luftspalt zwischen Schale und Abzugshaube sowie der Unterdruck im System dienen zum Regulieren der Luftzufuhr und damit zur Beeinflussung der Rußeigenschaften. Infolge der Hitzestrahlung der Abzugshaube verdampft der Rohstoff und wird teilweise verbrannt, hauptsächlich jedoch in Ruß überführt. Zur Abtrennung des Rußes werden die rußhaltigen Prozeßgase nach dem Abkühlen in ein Filter geleitet.

Beim Gasruß-Verfahren wird der Rußrohstoff zunächst in einen wasserstoffhaltigen Trägergasstrom hinein verdampft und dann in einer Vielzahl von kleinen Flämmchen unterhalb einer gekühlten Walze verbrannt. Ein Teil des entstehenden Rußes scheidet sich auf der Walze ab, ein anderer wird mit den Prozeßgasen ausgetragen und in einem Filter abgeschieden.

Die genannten Herstellverfahren für Ruß sind aus Ullmanns Enzyklopädie der technischen Chemie 4. Auflage Band 14 Seite 633 folgende bekannt.

Alle drei Verfahren sind prinzipiell im Sinne der Erfindung einsetzbar, bevorzugt aber das Furnace-Verfahren.

Es ist bekannt, Ruß mit Silizium zu dotieren. Mit Silizium dotierte Ruße sind zum Beispiel aus der WO 96/37547 bekannt. Siliziumhaltige Ruße können zum Beispiel dadurch hergestellt werden, daß dem Rußrohstoff siliziumhaltige Verbindungen zugesetzt werden.

Es ist weiterhin bekannt, Ruß auch mit anderen Elementen zu dotieren (US 3 448 052; EP 278 743 A1; EP 829 511 A1). Die Dotierungsverfahren sind der Siliziumdotierung ähnlich.

Aggregate, bestehend aus einer Rußphase und einer metallhaltigen Phase sind aus WO 98/42778 bekannt.

Bekannt ist auch ein Verfahren zur Herstellung eines innigen Gemisches von Ruß mit Oxiden der Elemente Bor, Silizium, Aluminium, Titan, Zirkonium, Zink, Blei, Zinn, Eisen, Kobalt, Nickel, Mangan, Chrom, Vanadium, Molybdän, Niob und Tantal (US 3094428).

Weiterhin ist ein Verfahren zur Herstellung von Ruß durch Einbringen einer Metallverbindung der Gruppe Gallium, Indium, Aluminium oder Mischungen hiervon bekannt (US 3306762). Der Zusatz dieser Metallverbindungen bewirkt wie der Zusatz von Alkalimetallverbindungen eine Herabsetzung der Struktur.

Bekannt ist auch ein Verfahren zur Herstellung von Rußen durch Zusatz von Seltenen Erden mit Ordnungszahlen zwischen 57 und 71 (US 3383175).

Aufgabe der vorliegenden Erfindung ist es, einen Ruß zur Verfügung zu stellen, der besondere Eigenschaften wie zum Beispiel veränderten Farbton, veränderte elektrische Eigenschaften, veränderter pH-Wert, funktionelle Gruppen, reaktive Stellen und verbesserte dynamische Eigenschaften in Gummi aufweist. Eine weitere Aufgabe ist die Beeinflussung der Rußstruktur.

Gegenstand der Erfindung sind Ruße, welche dadurch gekennzeichnet sind, daß sie mit Elementen, die nicht Kohlenstoff sind, dotiert sind, wobei Kohlenstoffpaare durch isoelektronische Elementpaare beziehungsweise Elementkombinationen ersetzt sind und sie isoelektronische Elementpaare beziehungsweise Elementkominationen aus einem dreiwertigen Element und einem fünfwertigen Element enthalten. Die isoelektronischen Elementpaare beziehungsweise Elementkombinationen können aus unterschiedlichen Elementen bestehen.

Erfindungsgemäß kann der Ruß 0,01 bis 50 Gew.-% der isoelektronischen Elementpaare beziehungsweise Elementkombinationen, bezogen auf das Gesamtgewicht, enthalten. Die Elemente können dabei in einem molaren Verhältnis von 0,5/1 bis 1/1,5, vorzugsweise von 0,8/1 bis 1/1,2 stehen.

Die Ruße können zusätzlich mit anderen Elementen, bevorzugt Silizium, dotiert sein.

Der erfindungsgemäße Ruß kann als Elementkombination B/N, Al/P und/oder Ga/As enthalten.

Erfindungsgemäß kann der Ruß durch den Einbau von isoelektronischem BN in den Rußkohlenstoff hergestellt werden.

Gemäß Erfindung werden immer mindestens zwei nebeneinanderliegende Kohlenstoffatome als eine C=C-Einheit durch eine unzertrennliche, im Sinne der gewünschten Dotierung voneinander abhängige Elementkombination aus isoelektronischen drei-und fühfuertigen Elementen, vorzugsweise der Hauptgruppen III und V, ersetzt. Sie können (mit gewisser Toleranz) etwa in gleichen Stoffmengenverhältnissen im Ruß vorliegen. Diese Kombination ist isoelektronisch mit C=C und bildet die selben Strukturen. So können beispielsweise aromatische oder graphitähnliche Strukturen, dreifache Koordination und Ausbildung von Doppelbindungen vorliegen.

Silizium als höheres Homologes des Kohlenstoffs ist in der Lage einen einzelnen Platz eines Kohlenstoffatoms zu ersetzen. Zwei benachbarte Siliziumatome stellen deshalb keine Elementkombination im Sinne der Erfindung dar. Sie sind auch nicht in der Lage, eine ungleichmäßige Ladungsverteilung zu bewirken, wie dies durch die erfindungsmäßigen Elementkombinationen erreicht werden kann.

In einer Ausführungsform der Erfindung einer solchen zu C=C isoelektrischen Kombination kann BN eingesetzt werden.

Bornitrid (BN) existiert in drei Modifikationen:
α-BN graphitanalog, hexagonal
β-BN diamantanalog, kubisch
γ-BN graphitanalog, aber metastabil.

Die Einheit BN ist isoelektronisch zu C₂. Die Eigenschaften der Bornitride sind denen der Kohlenstoff-Formen sehr ähnlich. In Analogie zum Diamant ist β-BN sehr hart und wird als Schleifmittel verwendet. Im Falle des α-BN spricht man regelrecht von "weißem Graphit", da es sich um eine weiche, schichtförmig aufgebaute Modifikation, die als Hochtemperaturschmiermittel eingesetzt werden kann, handelt. Auch gibt es BN-analoges Benzol, das Borazol und BN-Nanoröhren.

Der erfindungsgemäße Ruß kann ein Strukturelement gemäß der Formel I enthalten.

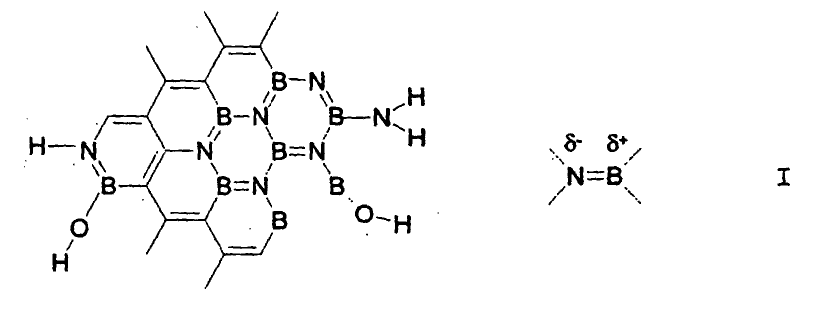

Obwohl die Gesamteinheit der beiden Elemente weder Elektronenüber- noch -unterschuß in Summe hinterläßt, sind hier die Elektronen innerhalb der Einheit ungleichmäßig verteilt. Hierdurch kann es zu Störung der Elektronenverteilung im Ruß kommen, wodurch zum Beispiel das aromatische System des Kohlenstoffs gestört wird und neue Eigenschaften erzeugt werden.

Die Elementkombinationen können im Ruß gleichmäßig verteilt sein oder an der Oberfläche angereichert sein. Sie können statistisch verteilt sein oder auch Nester bilden. Sie können Bestandteil des Kohlenstoff-Gerüstes sein oder separat neben den Kohlenstoff-Strukturen vorliegen.

Ein weiterer Gegenstand der Erfindung ist ein Verfahren zur Herstellung der Ruße, welches dadurch gekennzeichnet ist, daß man Verbindungen der dreiwertigen Elemente und Verbindungen der fünfwertigen Elemente gleichzeitig in den Rußherstellungsprozeß einführt.

Die Verbindungen können separat oder dem Öl beigemischt in die Rußbildungszone eingedüst werden. Die Verbindungen können einzeln oder vorgemischt in den Reaktor eingebracht werden. Beispielsweise kann man Borsäuretrimethylester und Triethylamin gleichzeitig in den Reaktor injizieren.

Beispielsweise kann man zur Dotierung mit den Elementen Bor und Stickstoff Boroxid, Borsäure und/oder Borax mit Harnstoff, Melamin, Ammoniumchlorid und/oder Ammoniak in den Rußrohstoff geben.

Beide Elemente können in einer Verbindung enthalten sein. Beispielsweise kann das Bornitrid selbst in den Rußrohstoff eingemischt werden.

Weitere Verfahren auf der Basis von Borhalogeniden und Ammmoniakderivaten, können genutzt werden.

Prinzipiell kann es sinnvoll sein, die Dotierungskomponenten, vorzugsweise B- und N-Komponenten, vor der Injektion in den Reaktor zu mischen, um sie in gewünschter Weise (chemisch über Lewis S/B-Reaktion) schon zueinander zu bringen.

Die Dotierung von Ruß mit isoelektronischen Elementpaaren beziehungsweise Elementkombinationen kann folgende Effekte bewirken:
1. veränderte Koloristik
   Für spezielle Anwendungen kann es von Interesse sein, einen Ruß mit einem bestimmten Farbton zu verwenden. So werden zum Beispiel für Druckfarben oft blaustichige Ruße bevorzugt. In grauen Lacken treten Farbtöne des Rußes oft deutlich hervor, hier können zum Beispiel auch andere Farbtöne als Blau gewünscht sein.
2. Einfluß auf die Rußstruktur
   Die Struktur des Rußes ist ein Ausdruck für die Größe der Aggregate, die aus den Primärteilchen gebildet werden. Bekannt ist, die Struktur durch Zusatz von Metallkationen, meist Kaliumionen, abzusenken. Weiterhin ist bekannt, daß die Struktur durch höhere Verweilzeiten erhöht werden kann. Die Erhöhung der Verweilzeit der Reaktanden im Reaktor führt zur Verringerung des Rußdurchsatzes und zur meist unerwünschten Verbreiterung der Teilchengrößenverteilung.
   Erfindungsgemäß kann die Struktur durch Dotierung erhöht werden, ohne daß der Durchsatz gesenkt wird und/oder die Teilchengößeverteilung verbreitert wird.
   Durch erfindungsgemäße Rußdotierung können Alkalimetall-haltige Ruß-Rohstoffe zur Herstellung von Ruß verwendet werden, ohne das der resultierende Ruß unter der Wirkung des strukturabsenkenden Alkalimetalls eine abgesenkte Struktur aufweist. Der Struktursenkung durch das Alkalimetall wird durch, zum Beispiel BN-Dotierung, entgegengewirkt.
3. veränderte elektrischen Eigenschaften in Abhängigkeit von der zugesetzten BN-Menge(Leiter, Halbleiter).
4. durch teilweise Hydrolyse der isoelektronischen Elemente mit dem Quench-Wasser können Funktionalitäten erzeugt werden, die direkt für neue Rußeigenschaften sorgen oder als reaktive Stelle für weitere chemische Modifizierungen dienen.
   Während die unpolaren CC-Bindungen kaum von Wasser angegriffen werden, sind die polaren Bindungen zwischen den verschiedenen Elementen innerhalb der zur Dotierung verwendeten isoelektronischen Elementkombination leichter hydrolysierbar. Die resultierenden Gruppen wie zum Beispiel -NH₂ oder B-OH sind reaktiver als C-H-Bindungen und können Folgereaktionen bei einer chemischen Nachbehandlung eingehen.
5. auch ohne Hydrolyse werden mehr reaktive Stellen gebildet.
   Die Störung des Kohlenstoffgitters durch benachbarte Dotierungselemente kann sowohl an den Kohlenstoffatomen als auch an den Fremdelementen erhöhte Reaktivität in Form von aktivierten Bindungen, Fehlordnungen, Polarisierungen etc. bewirken.
6. durch die Dotierung werden die dynamischen Eigenschaften von dotierten Ruß enthaltenden Gummimischungen verbessert, insbesondere wird der tan δ 60 °C-Wert abgesenkt.
7. Veränderung des pH-Wertes ohne Nachbehandlung
   Furnaceruße haben häufig pH-Werte im deutlich basischen Bereich. Durch den Einbau von Fremdelementen kann dieser pH-Wert gesenkt werden.

In einer anderen Ausführungsform der Erfindung kann man dem Rußrohstoff entsprechende Verbindungen der III. Hauptgruppe und Verbindungen der V. Hauptgruppe des Periodensystems der Elemente zumischen, die nicht B/N sind. Beispiele hierfür können der Zusatz von Trimethylgallium, Triethylaluminium oder Trimethylindium beziehungsweise Arsan, Phosphan und deren organischen Abkömmlingen wie beispielsweise Trimethylarsan oder Triphenylphosphan sein.

Die erfindungsgemäßen Ruße können zum Beispiel an dem B-beziehungsweise N-haltigen Stellen funktionelle Gruppen, die aus der Dotierung direkt oder aus der partiellen Hydrolyse beziehungsweise Solvolyse von BN im Ruß resultieren, aufweisen.

Die erfindungsgemäßen Ruße können mit bekannten Nachbehandlungsmethoden modifiziert werden. Sie können nachoxidiert, chemisch modifiziert, mit anderen Elementen als Synergiekomponente dotiert sein. Eine Dotierung kann mit Silizium nach bekannten Methoden erfolgen.

Die erfindungsgemäßen Ruße werden als Pigment oder Füllstoff in Gummi, Kunststoff, Lack, Druckfarben oder ähnlichem eingesetzt. Die Verwendung des erfindungsmäßen Rußes in Gummimischung kann eine tan δ 60° C Absenkung und/oder eine tan δ 0° C Anhebung bewirken.

Die erfindungsmäßigen Ruße können in Kautschukmischungen verwendet werden.

Die erfindungsmäßigen Ruße können zur Herstellung von Formkörpern, insbesondere Luftreifen, Reifenlaufflächen, Kabelmänteln, Schläuchen, Treibriemen, Förderbändern, Walzenbelägen, Schuhsohlen, Dichtungen, Profilen und Dämpfungselementen verwendet werden.

### Beispiele

### Beispiel 1: Mit BN dotierter Ruß in Gummimischung für Reifenanwendungen

In einen Furnace-Reaktor werden 160 Nm³/h Verbrennungsluft, 10,8 Nm³/h Brennstoff (Erdgas) und eine Mischung aus 30 Kg/h Rußöl, 450 g/h BN-Pulver, 3608 g/h Glyzerin und 750 g/h Wasser eingedüst. Dabei wird die zuerst bereitete Suspension des BN-Pulvers in Glycerin und Wasser dem Rußöl über ein Y-Stück und einen statischen Mischer zugemischt. Der entstehende dotierte Ruß B1 wird abgeschieden und verdichtet. Der resultierende Ruß B1 enthält 0,93 Gew.-% Bor und 1,4 Gew.-% Stickstoff.

In demselben Furnace-Reaktor werden 160 Nm³/h Verbrennungsluft, 10,8 Nm³/h Brennstoff (Erdgas)und 34 Kg/h Rußöl eingedüst. Der entstehende undotierte Vergleichsruß V1 wird abgeschieden und verdichtet.

Der Ruß B1 und der Vergleichsruß V1 werden zur Herstellung von Gummimischungen verwendet. An den Gummimischungen werden unter anderem die viskoelastischen Eigenschaften bestimmt.

Die viskoelastischen Eigenschaften der mit diesen Rußen verstärkten Gummimischungen werden nach DIN 53513 bestimmt. Es werden insbesondere die Verlustfaktoren tan δ bei 0°C und bei 60°C ermittelt. Die für die Gummimischungen verwendete Testrezeptur ist in Tabelle 1 aufgeführt.

**Tabelle 1:**

| SSBR/BR-Testrezeptur | |
|---|---|
| Mischungs-Komponente | Gehalt [phr] |
| SSBR | 96,0 |
| BR | 30,0 |
| Ruß | 80,0 |
| ZnO RS | 3,0 |
| Stearinsäure | 2,0 |
| aromatisches Öl | 10,0 |
| 6 PPD | 1,5 |
| Wachs | 1,0 |
| CBS | 1,5 |
| DPG | 2,0 |
| TBZTD | 0,2 |
| Schwefel | 1,5 |

Bei der SSBR Kautschukkomponente handelt es sich um ein in Lösung polymerisiertes SBR-Copolymer mit einem Styrolgehalt von 25 Gew.-% und einem Butadiengehalt von 75 Gew.-%. Der Vinylgehalt des Butadiens beträgt 67 %. Das Copolymer enthält 37,5 phr Öl und wird unter dem Handelsnamen Buna VSL 5025-1 von Bayer AG vertrieben. Seine Mooney-Viskosität (ML 1+4/100°C) beträgt etwa 50.

Bei der BR Kautschukkomponente handelt es sich um ein cis 1,4-Polybutadien (Neodymtyp) mit einem cis 1,4-Gehalt von mindestens 96 Gew.-%, einem trans 1,4-Gehalt von 2 Gew.-%. einem 1,2-Gehalt von 1 Gew.-% und einer Mooney-Viskosität von 44 ± 5. Diese Komponente wird unter dem Handelsnamen Buna CB 24 von der Bayer AG vertrieben.

Als aromatisches Öl wird Naftolen ZD von Chemetall verwendet. Bei dem PPD-Anteil der Testrezeptur handelte es sich um Vulkanox 4020 und bei dem CBS-Anteil um Vulkacit CZ,bei DPG um Vulkacit D und bei TBZTD um Perkacit TBZTD, alle von der Bayer AG. Als Wachs wird Protector G35 von der HB-Fuller GmbH eingesetzt.

Die Einarbeitung der Ruße in die Gummimischung wird in drei Stufen entsprechend der folgenden tabellarischen Aufstellung (Tabelle 2-4)vorgenommen:

**Tabelle 2**

| Stufe 1 | |
|---|---|
| Einstellungen | |
| Mischaggregat | Mischkammer 350S, Brabender |
| Friktion | 1:1,11 |
| Drehzahl | 70 min⁻¹ |
| Stempeldruck | 5,5 bar |
| Leervolumen | 0,39 1 |
| Füllgrad | 0,70 |
| Durchflußtemp. | 80°C |

| Mischvorgang | |
|---|---|
| 0 bis 1 min | Buna VSL 5025-1 + Buna CB 24 |
| 1 bis 3 min | 1/2 Ruß + ZnO RS + Stearinsäure + Naftolen |
| | ZD + ggf. Si69 |
| 3 bis 4 min | 1/2 Ruß, Vulkanox 4020 + Protector G35 |
| 4 min | Säubern |
| 4 bis 5 min | Mischen |
| 5 min | Säubern |
| 5 bis 6 min | Mischen und ausfahren |
| | |
| Batch-Temp. | 150-155°C |
| Lagerung | 24 h bei Raumtemperatur |

**Tabelle 3:**

| Stufe 2 | |
|---|---|
| Einstellungen | |
| Mischaggregat | wie in Stufe 1 bis auf |
| Füllgrad | 0,68 |
| Drehzahl | 80 min⁻¹ |

| Mischvorgang | |
|---|---|
| 0 bis 2 min | Batch von Stufe 1 aufbrechen |
| 2 bis 5 min | Batchtemperatur 155 °C halten durch Drehzahlvariation |
| 5 min | Ausfahren |
| Batch-Temp. | 155°C |
| Lagerung | 4h/RT |

**Tabelle 4:**

| Stufe 3 | |
|---|---|
| Einstellungen | |
| Mischaggregat | wie in Stufe 1 bis auf |
| Füllgrad | 0,66 |
| Durchflußtemp. | 50 °C |
| Drehzahl | 40 min⁻¹ |

| Mischvorgang | |
|---|---|
| 0 bis 2 min | Batch von Stufe 2 + Vulkacit CZ + Vulkacit D und Perkacit TBZTD + Schwefel |
| 2 min | Ausfahren und auf Labormischwalzwerk (Troester WNU1, Durchmesser 100 mm, Länge 250 mm, Durchflußtemperatur 50°C) Fell bilden. |
| | Zum Homogenisieren dann: 3 x links und 3 x rechts einscheiden und umklappen sowie |
| | 8 x bei engem Walzenspalt (0.3 mm) und 3 x bei breitem Walzenspalt (3,5 mm) stürzen und anschließend Fell ausziehen. |

Die anschließende Bestimmung der gummitechnischen Eigenschaften Shore-Härte sowie Verlustfaktor tanδ bei 0 und 60°C erfolgt gemäß den aufgeführten Normen. Die Meßbedingungen für die viskoelastischen Eigenschaften sind in Tabelle 5 zusammengestellt.

**Tabelle 5:**

| Bestimmung der viskoelastischen Eigenschaften gemäß DIN 53513 | |
|---|---|
| Vulkanisation der Probenkörper | |
| vulkanisations-Temperatur | 165°C |
| Vulkanisations-Dauer | T95 + 5 min (T95:DIN 53529) |

| Probenkörperform | |
|---|---|
| Form | zylindrisch |
| Länge | 10 mm |
| Durchmesser | 10 mm |
| Anzahl | 5 |

| Prüfmaschine | |
|---|---|
| Typ/Hersteller | 830/MTS |
| Art der Beanspruchung | Dehnung |
| Mittlere Kraftamplitude | 50 N |
| Dynamische Kraftamplitude | ± 25 N |
| Prüffrequenz | 16 Hz |
| Prüfablauf | 5 min temperieren dann dynamische Belastung bei 16 Hz für die Dauer von 2 min mit nachfolgender Messung |

Verwendet wird jeweils der Medianwert der Messungen an den fünf Probekörpern.

Die Ergebnisse der gummitechnischen Untersuchungen sind in Tabelle 6 aufgelistet.

**Tabelle 6:**

| Ergebnisse der gummitechnischen Untersuchungen | | | | | |
|---|---|---|---|---|---|
| Füllstoff | CTAB ASTM D-3765 m²/g | DBP ASTM D-2414 ml/100g | Shore A DIN 53505 | tanδ0 DIN 53513 | tanδ60 DIN 53513 |
| V1 | 103 | 112 | 65 | 0,501 | 0,273 |
| B1 | 104 | 117 | 67 | 0,508 | 0,255 |

Gegenüber dem Vergleichsruß V1 verleiht der erfindungsgemäße Ruß B1 der Gummimischung einen um 6,6 % verminderten Verlustfaktor bei 60°C und einen um 1,4 % erhöhten Verlustfaktor bei 0°C. Von Reifen, die aus derartigen Gummimischungen hergestellt werden, ist ein verbessertes Naßrutschverhalten bei gleichzeitig vermindertem Rollwiderstand zu erwarten.

### Beispiel 2: Beeinflussung der Rußstruktur durch Dotierung mit BN

In einen Furnace-Reaktor werden 160 Nm³/h Verbrennungsluft, 10,8 Nm³/h Brennstoff (Erdgas) und eine Mischung aus 30 Kg/h Rußöl, 450 g/h BN-Pulver, 3608 g/h Glyzerin und 750 g/h Wasser eingedüst. Dabei wird die zuerst bereitete Suspension des BN-Pulvers in Glycerin und Wasser dem Rußöl über ein Y-Stück und einen statischen Mischer zugemischt. Gleichzeitig wird durch Injektion von 1 l/h Pottaschelösung, deren Konzentration durch die Leitfähigkeit von 140 µS definiert ist, verhindert, daß die Struktur beliebig hoch wird. Der entstehende dotierte Ruß B2 wird unverdichtet abgeschieden. Der resultierende Ruß B2 enthält 0,93 Gew.-% Bor und 1,4 Gew.-% Stickstoff.

Unter gleichen Bedingungen wird nur durch Weglassen des BN-Pulvers ein undotierter Ruß hergestellt und unverdichtet als Vergleichsruß V2 abgeschieden.

Vom Ruß B2 und dem Vergleichsruß V2 wird jeweils die Struktur bestimmt. Die Strukturbestimmung mittels DBP-Absorption erfolgt nach ASTM D-2414.

Der BN-dotierte Ruß B2 weist eine DBP-Absorption von 124,4 ml/100g bei einer CTAB von 103,6 m²/g auf, der undotierte Ruß V2 nur eine-DBP von-97; 1-ml/100g bei einer CTAB von 103,3 m²/g. Die Dotierung mit Bor und Stickstoff erhöht die Struktur um 28 %.

### Beispiel 3: Einfluß der Dotierung mit BN auf den Farbton des Rußes

In einen Furnace-Reaktor werden 160 Nm³/h Verbrennungsluft, 10,8 Nm³/h Brennstoff (Erdgas) und eine Mischung aus 30 Kg/h Rußöl, 450 g/h BN-Pulver, 3608 g/h Glyzerin und 750 g/h Wasser eingedüst. Dabei wird die zuerst bereitete Suspension des BN-Pulvers in Glycerin und Wasser dem Rußöl über ein Y-Stück und einen statischen Mischer zugemischt. Der entstehende dotierte Ruß B2 wird unverdichtet abgeschieden. Der resultierende Ruß B2 enthält 0,93 Gew.-% Bor und 1,4 Gew.-% Stickstoff. Er hat eine DBP-Absorption von 124,4 ml/100g und eine CTAB-Absorption von 103,6 m²/g.

In einen Furnace-Reaktor werden 160 Nm³/h Verbrennungsluft, 10,8 Nm³/h Brennstoff (Erdgas) und eine Mischung aus 30 Kg/h Rußöl, 150 g/h BN-Pulver, 3608 g/h Glyzerin und 750 g/h Wasser eingedüst. Dabei wird die zuerst bereitete Suspension des BN-Pulvers in Glycerin und Wasser dem Rußöl über ein Y-Stück und einen statischen Mischer zugemischt. Der entstehende dotierte Ruß B3 wird unverdichtet abgeschieden. Der resultierende Ruß B3 enthält 0,35 Gew.-% Bor und 0,75 Gew.-% Stickstoff. Er hat eine DBP-Absorption von 115,3 ml/100g und eine CTAB von 105,2 m²/g.

Im Furnace-Reaktor werden 160 Nm³/h Verbrennungsluft, 10,8 Nm³/h Brennstoff (Erdgas) und 34 Kg/h Rußöl eingedüst. Der entstehende undotierte Vergleichsruß V3 wird unverdichtet abgeschieden. Der Ruß V3 hat eine DBP-Absorption von 115,2 ml/100g und eine CTAB-Absorption von 103 m²/g.

In einen Furnace-Reaktor werden 160 Nm³/h Verbrennungsluft, 10,8 Nm³/h Brennstoff (Erdgas) und eine Mischung aus 33 Kg/h Rußöl, 3608 g/h Glyzerin und 750 g/h Wasser eingedüst. Dabei wird die zuerst bereitete Mischung aus Glycerin und Wasser dem Rußöl über ein Y-Stück und einen statischen Mischer zugemischt. Der entstehende undotierte Ruß V4 wird unverdichtet abgeschieden. Der Ruß V4 hat eine DBP-Absorption von 98,2 ml/100g und eine CTAB-Absorption von 100,2 m²/g.

Die Farbe eines Körpers kann in Diagrammen beziehungsweise Farbsystemen veranschaulicht werden. Ein solches System ist das CIELAB-System. Näheres ist in Hansl Loos: "Farbmessung", Verlag Beruf + Schule, Itzehoe 1989 ab Seite 103 beschrieben. In einem kreisförmigen Diagramm sind die Farbtöne abgebildet. Durch Angabe von Koordinaten oder Winkeln kann der Farbton eines Körpers beschrieben werden. Der Winkelwert h in ° ist dabei ein Parameter für den Farbton (blau, gelb, rot, grün). Er wird entgegen dem Uhrzeigersinn von der +a*-Achse aus angegeben. Weitere Beschreibungen sind auch in Hans G. Völz: Industrielle Farbprüfung, VCH, Weinheim 1990 Seite 23ff zu finden.

Die Ruße werden in einen Alkyd-Melaminharz-Einbrennlack eingearbeitet. In einen Lack aus 23,4 Teilen Maprenal MF 800 (55%ig), 50,3 Teilen Alkydal F 310 (60%ig) und 22 Teilen Xylol-basiertem Verdünner werden 4,3 Teile getrockneter Ruß gegeben. Der Ruß wird mittels der siebenfachen Masse Stahlkugeln in einem Becher auf einem Skandexmischer BA-S 20 30 min. dispergiert. Anschließend werden die Kugeln wieder vom Lack getrennt. Der rußhaltige Lack wird mit einer Lackhantel (90 µm) auf eine gereinigte Glasplatte in der Größe von 6x10 cm aufgetragen. Nach Ablüften werden die Proben 30 min im Trockenschrank bei 130°C eingebrannt.

Mit dem Meßgerät RAUSCH Q-COLOR 35 und der Software WIN-QC werden die koloristischen Daten ermittelt.

Die undotierten Ruße V3 und V4 zeigen Werte für h von 16,2° beziehungsweise 14,6° und liegen damit in Richtung gelbrot, während die dotierten Ruße B3 und B2 Werte für h von 355,8° beziehungsweise 341,9° zeigen und so in Richtung blaurot liegen. Die Dotierung mit Bor und Stickstoff verändert somit den Farbton der resultierenden Ruße.

### Beispiel 4: Dotierung eines Rußes mit Bor und Stickstoff durch gemeinsame Injektion von einer nur borhaltigen Verbindung und einer nur stickstoffhaltigen Verbindung in den Reaktor

In einen Furnace-Reaktor werden 160 Nm³/h Verbrennungsluft, 10,8 Nm³/h Brennstoff (Erdgas) und eine Mischung aus 29 Kg/h Rußöl, 935 g/h Borsäure in 3608 g/h Glyzerin und 1815 g/h Harnstoff in 750 g /h Wasser eingedüst. Beide Dotierungskomponenten und beide Lösungsmittel bilden letztlich eine einheitliche Lösung, die dann über ein Y-Stück und einen statischen Mischer zugemischt wird. Obwohl B und N letztlich in etwa gleichen molaren Anteilen im Ruß eingebaut werden sollen, wird der stickstoffhaltige Ausgangsstoff im Überschuß gegenüber der B-Komponente eingesetzt. Der entstehende dotierte Ruß B4 wird unverdichtet abgeschieden. Der resultierende Ruß B4 enthält 0,15 Gew.-% Bor und 0,3 Gew.-% Stickstoff.

### Beispiel 5: Veränderung des pH-Wertes durch Dotierung mit Bor und Stickstoff

Der pH-Wert von Rußen wird nach DIN EN ISO 787-9 bestimmt.

Die in den vorherigen Beispielen beschriebenen Vergleichsruße V3 und V4 haben einen pH-Wert von 8,4 beziehungsweise 8,6. Die dotierten Ruße B2, B3 beziehungsweise B4 weisen pH-Werte von 7,3, 7,6 beziehungsweise 7,4 auf. Durch die Dotierung ist es möglich den pH-Wert der Ruße um eine pH Einheit abzusenken.

Die rußanalytischen Kenndaten der hergestellten Ruße beziehungsweise der Ruße in Anwendungssystemen werden für alle Beispiele nach folgenden Methoden (Tabelle 7) ermittelt:

**Tabelle 7:**

| Analysenmethoden | |
|---|---|
| **Kennzahl** | **Methode** |
| DBP-Absorption | ASTM D-2414 |
| Elementaranalyse C, N | CARLO ERBA CE 1108 |
| Elementaranalyse B | Veraschung im Hochdruckverascher HPA-F Anton Paar, Schmelzflußaufschluß in NaOH und Na2O2, Analyse mit ICP Optima 3300DV Perkin-Elmer |
| CTAB | ASTM D-3765 |
| pH-Wert | DIN EN ISO 787-9 |
| Farbtonwert h | DIN 5033; RAUSCH Q-COLOR 35 mit WIN-QC |
| Viskoelastischen Eigenschaffen der Gummimischungen (tan δ) | DIN 53513 |
| Shore-Härte | DIN 53505 |

## Patentansprüche

1. Ruße, **dadurch gekennzeichnet, daß** sie mit Elementen, die nicht Kohlenstoff sind, dotiert sind, wobei Kohlenstoffpaare durch isoelektronische Elementpaare beziehungsweise Elementkombinationen ersetzt sind und sie isoelektronische Elementpaare beziehungsweise Elementkombinationen aus einem dreiwertigen Element und einem fünfwertigen Element enthalten.

2. Ruße nach Anspruche 1, **dadurch gekennzeichnet, daß** sie 0,01 bis 50 Gew.-% der isoelektronischen Elementpaare beziehungsweise Elementkombinationen, bezogen auf das Gesamtgewicht, enthalten.

3. Ruße nach Ansprüchen 1 und 2, **dadurch gekennzeichnet, daß** die Elemente in einem Verhältnis von 0,5/1 bis 1/1,5 stehen.

4. Ruße nach Ansprüchen 1 bis 3, **dadurch gekennzeichnet, daß** sie zusätzlich mit anderen Elementen dotiert sind.

5. Verfahren zur Herstellung von Rußen gemäß den Ansprüchen 1 bis 3, **dadurch gekennzeichnet, daß** man Verbindungen der dreiwertigen Elemente und Verbindungen der fünfwertigen Elemente gleichzeitig in den Rußherstellprozeß einführt.

6. Verwendung der Ruße nach Anspruch 1 in Gummi, Kunststoffen, Lacken, Tinten und Druckfarben.

7. Verwendung nach Anspruch 6, **dadurch gekennzeichnet, daß** die Ruße nach Anspruch 1 in Gummimischungen eine Absenkung von tan δ 60°C und/oder eine Anhebung von tan δ 0°C bewirken.

## Claims

1. Carbon blacks, **characterized in that** they are doped with elements that are not carbon, wherein pairs of carbon atoms have been replaced by isoelectronic pairs of elements or combinations of elements, and they contain isoelectronic pairs of elements or combinations of elements consisting of a trivalent element and a pentavalent element.

2. Carbon blacks according to claim 1, **characterized in that** they contain from 0.01 to 50 wt.% of the isoelectronic pairs of elements or combinations of elements, based on the total weight.

3. Carbon blacks according to claims 1 and 2, **characterized in that** the elements are in a ratio of from 0.5/1 to 1/1.5.

4. Carbon blacks according to claims 1 to 3, **characterized in that** they are additionally doped with other elements.

5. Process for the preparation of carbon blacks according to claims 1 to 3, **characterized in that** compounds of the trivalent elements and compounds of the pentavalent elements are introduced into the carbon black preparation process simultaneously.

6. Use of the carbon blacks according to claim 1 in rubber, plastics, paints, inks and printing inks.

7. Use according to claim 6, **characterised in that** the carbon blacks according to claim 1 bring about a reduction in tan δ 60°C and/or an increase in tan δ 0°C in rubber mixtures.

## Revendications

1. Noirs de carbone,
**caractérisés en ce qu'**
ils sont dopés avec des éléments qui ne sont pas du carbone, les paires de carbone étant remplacées par des paires d'éléments ou des combinaisons d'éléments isoélectriques, et ils contiennent des paires d'éléments ou des combinaisons d'éléments isoélectroniques constituées d'un élément trivalent et d'un élément pentavalent.

2. Noirs de carbone selon la revendication 1,
**caractérisés en ce qu'**
ils contiennent 0,01 à 50 % en poids de paires d'éléments ou de combinaisons d'éléments isoélectroniques, par rapport au poids total.

3. Noirs de carbone selon les revendications 1 et 2,
**caractérisés en ce que**
les éléments sont dans un rapport de 0,5 / 1 à 1/1,5.

4. Noirs de carbone selon les revendications 1 à 3,
**caractérisés en ce qu'**
ils sont dopés, en complément, avec d'autres éléments.

5. Procédé de fabrication de noirs de carbone selon les revendications 1 à 3,
**caractérisés en ce qu'**
on introduit des composés d'éléments trivalents et des composés d'éléments pentavalents en même temps dans le processus de fabrication des noirs de carbone.

6. Utilisation des noirs de carbone selon la revendication 1 dans le caoutchouc, les matières synthétiques, les peintures, les teintures et les encres d'imprimerie.

7. Utilisation selon la revendication 6,
**caractérisée en ce que**
les noirs de carbone selon la revendication 1 provoquent, dans les mélanges de caoutchoucs, un abaissement de tan δ 60°C et/ou une élévation de tan δ 0°C.
